# EUROPEAN PATENT SPECIFICATION

(11) **EP 2 798 779 B1**
(45) Date of publication and mention of the grant of the patent: **11.04.2018**
(21) Application number: 13751888.2
(22) Date of filing: 20.02.2013
(51) Int. Cl.: H04L 12/16, G06F 3/01, H04M 1/00, H04N 7/14, H04M 1/725, H04M 3/54, H04N 21/442, H04M 1/253

(54) **TRANSFERRING OF COMMUNICATION EVENT**
ÜBERTRAGUNG EINES KOMMUNIKATIONSEREIGNISSES
TRANSFERT D'UN ÉVÈNEMENT DE COMMUNICATION

(30) Priority: 20.02.2012 US 201213400403
(43) Date of publication of application: 05.11.2014
(73) Proprietor: Microsoft Technology Licensing, LLC, Redmond, WA 98052 (US)
(72) Inventor: ROSENBERG, Jonathan, Redmond, Washington 98052-6399 (US)
(74) Representative: Driver, Virginia Rozanne
(86) International application number: PCT/US2013/026916
(87) International publication number: WO 2013/126435

(56) References cited:
- EP-A1- 1 526 457
- US-A1- 2006 291 474
- US-A1- 2010 159 981
- US-A1- 2010 272 250
- US-A1- 2011 110 371
- US-A1- 2011 163 944
- US-A1- 2011 219 419
- US-A1- 2011 243 141
- US-A1- 2012 005 632

## Description

### FIELD OF THE INVENTION

The present invention relates to a communication system and a corresponding method for transferring voice and/or video calls between user devices or terminals.

### BACKGROUND OF THE INVENTION

Communication systems exist which allow a live voice and/or video call to be conducted between two or more end-user terminals over a packet-based network such as the Internet, using a packet-based protocol such as internet protocol (IP). This type of communication is sometimes referred to as "voice over IP" (VolP) or "video over IP".

To use the communication system, each end user first installs a client application onto a memory of his or her user terminal such that the client application is arranged for execution on a processor of that terminal. To establish a call, one user (the caller) indicates a username of at least one other user (the callee) to the client application. When executed the client application can then control its respective terminal to access a database mapping usernames to IP addresses, and thus uses the indicated username to look up the IP address of the callee. The database may be implemented using either a server or a peer-to-peer (P2P) distributed database, or a combination of the two. Once the caller's client has retrieved the callee's IP address, it can then use the IP address to request establishment of a live voice and/or video stream between the caller and callee terminals via the Internet or other such packet-based network, thus establishing a call.

However, with the increasing prevalence of electronic devices capable of executing communication software, both around the home and in portable devices on the move, then it is possible that the same end user may have multiple instances of the same client application installed on different terminals.

When a user is conducting a call using a user device, he sometimes desires to transfer the call to an alternate user device. For example, if he is conducting a voice over IP (VolP) call via the Internet, using his personal computer (PC), he may wish to transfer the call to a mobile device to allow him to leave the location where his PC is fixed. Alternatively, if a video call is being conducted, he may want to transfer the call from a user device with a small screen to a user device with a larger screen. At present, it is possible to transfer calls between devices, but it requires a user to interact with a menu on the device to select an alternate device and then transfer the call. Such menus can be confusing, so that today transferring of calls between devices is a complex process which often confuses users and frequently results in dropped calls. Furthermore, the problem is getting more complicated as users have an increasing number of devices (mobile phones, televisions, soft phone applications, etc.) and increasingly complex call scenarios (video, video and sharing, etc.). At present, very few attempts have been made to address the complexities arising from these situations.

US 20110243141 A1 discloses a system comprising: a first user device and at least a second user device for a same user, at least one of the first and second user devices being a household media appliance, and each being installed with a respective instance of a communication client application for conducting voice or video calls over a packet-based network. Each instance is associated with a same user identifier identifying said same user, a first of said instances is associated with a first sub-identifier, and a second of said instances is associated with a second sub-identifier. The instances are configured so as, during an ongoing call conducted over a first network connection established based on said user identifier and the first sub-identifier, after the call has been answered, to establish a second network connection based on said user identifier and the second sub-identifier and to switch the call to the second network connection.

### SUMMARY OF THE INVENTION

According to an aspect of the present invention, there is provided a method as defined in claim 1. A further aspect of the invention provides a user device as defined in claim 6. For a better understanding of the present invention and to show how the same may be carried into effect, reference will now be made by way of example to the following drawings.

### BRIEF DESCRIPTION OF THE DRAWINGS

Figure 1 is a schematic diagram of a communication system;
Figure 2 is a schematic diagram of a communication system in an alternate context;
Figure 3 is a diagram illustrating the displays on a screen of the device; and
Figure 4 is a block diagram of a user device.

### DESCRIPTION OF THE PREFERRED EMBODIMENT

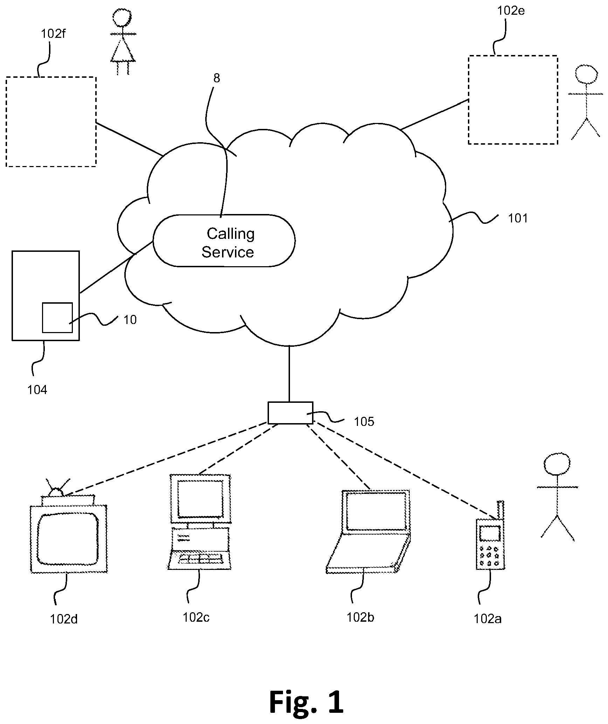

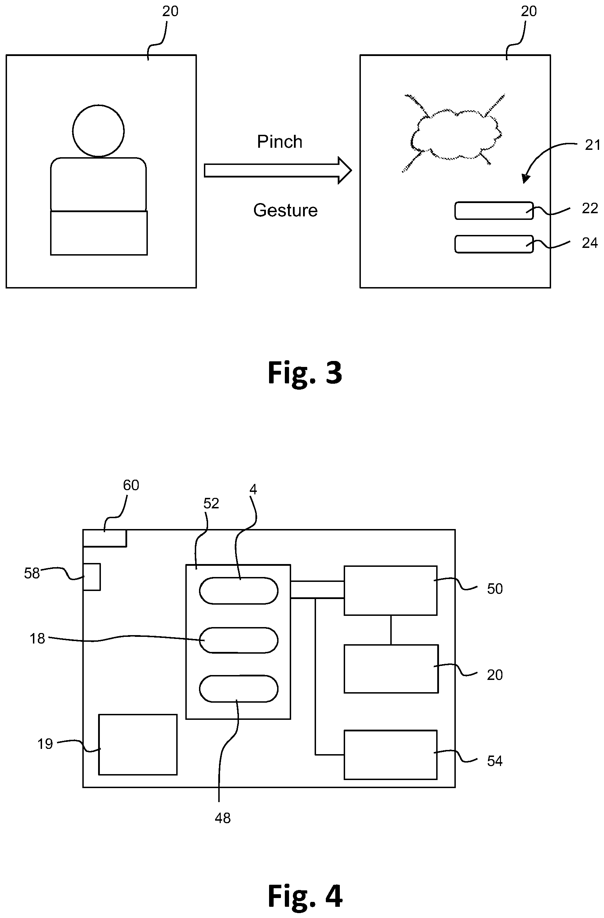

Figure 1 is a schematic diagram of a communication system implemented over a packet-based network such as the Internet 101. The communication system comprises respective end-user devices 102a ... 102g for each of a plurality of users. The devices are connected to or communicable with the Internet 101 via a suitable transceiver such as a wired or wireless modem. Each terminal 102 is installed with an instance of a client application 4 (shown in Figure 4) for accessing the communication system and thereby establishing a live packet-based voice or video call with the client of another user running on another such terminal 102.

In the illustrative embodiment of Figure 1 one user can be associated with multiple devices: a mobile handset type terminal 102a such as a mobile phone, a laptop computer 102b, a desktop computer 102c, and a television set or television with set-top box 102d. Other types of terminal 102 that may be installed with a communication client include photo frames, tablets, car audio systems, printers, home control systems, cameras, or other such household appliances or end-user devices, etc. Each of the multiple terminals 102a-102d of the same user is installed with a respective instance of the communication client application which the same user may be logged into concurrently, i.e. so the same user may be logged into multiple instances of the same client application on two or more different terminals 102a-102d simultaneously. This will be discussed in more detail below.

Each of the different end-user terminals 102a-102d of the same user may be provided with individual connections to the internet 101 and packet-based communication system, and/or some or all of those different terminals 102a-102d may connect via a common router 105 and thus form a local network such as a household network. Either way, it envisaged that in certain preferred embodiments some or all of the different terminals 102a-102d of the same user may be located in physical proximity to a user.

Also shown connected to the internet 101 is a data store 104 in the form of either a server, a distributed peer-to-peer database, or a combination of the two. The data store 104 forms part of a calling service 8 which provides an infrastructure for supporting communication events. A peer-to-peer database is distributed amongst a plurality of end-user terminals of a plurality of different users, typically including one or more users who are not actually participants of the call. However, this is not the only option and a central server can be used as an alternative or in addition. Either way, the data store 104 is connected so as to be accessible via the internet 101 to each of the client applications or instances of client applications running on each of the terminals 102 of each user's communication apparatus 103. The data store 104 is arranged to provide a mapping of usernames to IP addresses (or other such network addresses) so as to allow the client applications of different users to establish communication channels with one another over the Internet 101 (or other packet-based network) for the purpose of establishing voice or video calls, or indeed other types of communication such as instant messaging (IM) or voicemail.

The communication client 4 has a log in/registration facility which associates the mobile device 102 loaded with the client with a particular user. A user can have instances of the same communication client running on other devices associated with the same log in/registration details.

In the case where the same user can be simultaneously logged in to multiple instances of the same client application on different terminals 102a-102d, in embodiments the data store 104 may be arranged to map the same username (user ID) to all of those multiple instances but also to map a separate sub-identifier (sub-ID) to each particular individual instance. Thus the communication system is capable of distinguishing between the different instances whilst still maintaining a consistent identity for the user within the communication system.

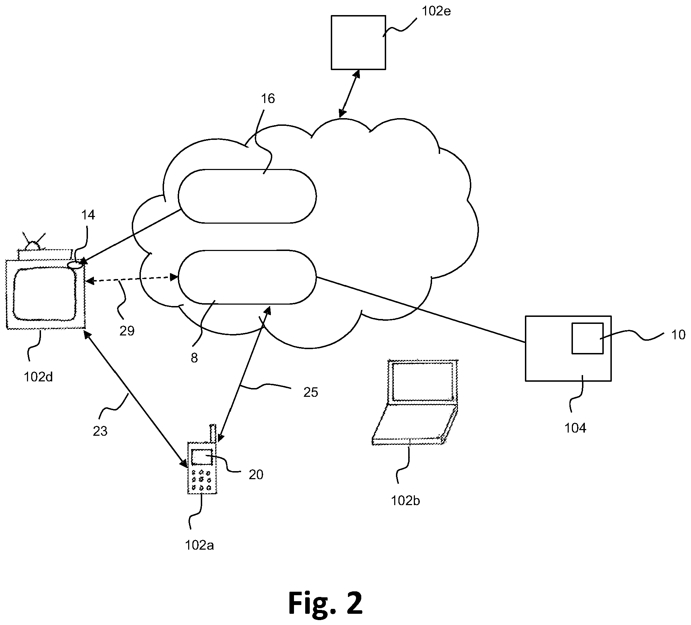

Figure 2 is a schematic diagram illustrating another exemplary context for an embodiment of the present invention. The context is a user in a hotel room. The user has a mobile phone 102a which is loaded with the communication client 4. The communication client is capable of conducting communication events such as voice calls and video calls using for example the voice over Internet protocol (VoIP). In this particular case, the login of the client 4 associates the user with the tablet device 102b which he has in the room with him and which also runs an instance of the communication client 4. The instances of the client 4 are in communication with the calling service 8. The calling service 8 can be any service capable of conducting communication events by the communication clients. One such service is Skype, which is a peer to peer service wherein the calling service issues authentication certificates to legitimate users, and wherein communication events between users are authenticated based on the authentication certificate. An authentication procedure is typically required to establish a call, which may involve the user providing credentials via the client to be centrally authenticated by a server, and/or may involve the exchange of the authentication certificates between the two or more users' client applications according to a P2P type authentication scheme. The data store 104 of the calling service 8 has access to a device list 10 for each user registered with it. In this case, as the tablet device 102b is running an instance of the client 4 on the same calling service 8 as the mobile device, the calling service is aware of the presence of the tablet from the device list. In contrast to the scenario of Figure 1, the hotel room also has a television 102'd which is loaded with a video client for example 14 which streams video for display to a viewer of the television, for example from broadcast service 16. This TV 102'd is not associated with the user by his login. The mobile device 2 is also loaded with a service discovery protocol 18 (discussed later) which allows it to detect the presence of the television in the room.

It is assumed in this example that the user wants to transfer a call which the user is currently taking on the mobile device 2. For example, this can be a video call, with the image of the caller presented to him in a display of the mobile device 2.

Reference will now be made to figure 3 which shows a sequence of screen images displayed to a user on a display screen 20 of the mobile device 102 in a call transfer method referred to herein as a "pinch-and-touch" technique. To implement this technique, it is assumed that the user is on a call on the mobile device 102 which supports multi touch gestures, such as a smart phone or tablet computer. While the call is taking place, the screen 20 can be rendering video for the call. When the user decides to transfer the call, he utilises a "pinch" gesture over the mid call control screen 20. The "pinch" gesture is captured by a visual motion recognition component described later, and can be a three finger pinch so that it can be distinguished from a "swipe" or other known gestures. One pinched, this is a signal to the mobile device 102 that the user wants to transfer the call. The communication client 4 rendering the call controls the screen so that the image on the screen "crumples up", while still rendering the content of the call. The crumpling action exposes additional screen real estate 21 which is then used to display a set of alternate locations where to transfer the call. These alternate locations are represented by specific device icons 22, 24, each item representing a user device in physical proximity to the user. That is, a set of alternate locations is contextual - it only includes devices which are in proximity to the device the current call is on (in this case mobile device 102). When the user selects one of the icons (for example by tapping on the screen), the call is automatically transferred to the device represented by that icon.

In the following description which explains how the above method is implemented, the "pinch" gesture of the user is referred to as a first input gesture, and the selection of the icon by tapping on the screen is referred to as a second input. Another approach is to drag the crumpled screen on top of the icons for target devices. The dragging could be with one finger (so: three-finger crumple, one finger drag) or with the same numbers as the crumple (three finger crumple and three-finger drag). Alternatively a 'flick' - a single finger swipe towards the target icon could be used.

With reference now to the context illustrated in Figure 2, the user is on a call over connection 25 to the third party 102e over calling service 8. When the user makes the first input gesture at the mobile device 102, the mobile device 102 reports its GPS location to the calling service 8. To do this, the mobile device 102 has a GPS positioning module 19 (see Figure 4). The calling service 8 interrogates the tablet device 102b and obtains its location as well. Alternatively, the tablet device 102b could report its presence on a Wifi network in common with the mobile device 102a. Using its service discovery protocol 18, the mobile device also detects the presence of the television 102d in the room. The television 102'd supports protocols which allow it to be instructed to connect to a calling service 8 on behalf of a user. The mobile device 102a thus includes in the set of icons it displays a representation for the television. To achieve this, the calling service 8 instructs the mobile device 102a to render icons for the tablet device 102b and television 102'd (with an indication that it is the hotel television) as alternate locations to which the call may be transferred. Assume that the user selects television 102d (by the second input of tapping icon 24 which represents television 102'd). The mobile device 102a connects to the television (see communication 23 in Figure 2) and provides to it a token with which it can log into the calling service 8. This communication can happen over Bluetooth, utilize near-field communications services (NFC), or WiFi. The television turns on automatically and video client 14 starts up and logs into the calling service 8 on behalf of the user using the token. The calling service begins pushing video to the television thereby creating a new connection 29 and transferring the call from the mobile device 102a to the television 102'd.

Communication between the client instances and the calling service 8 is enabled by reference to the system of user IDs and sub-IDs mapped to IP addresses or other such network addresses by the data store 104. Thus the list of sub-IDs for each user allows the different client instances to be identified, and the mapping allows a client instance, server or other network element to determine the address of each terminal on which one or more other different instances is running. In this manner it is possible to establish communications between one client and another or between the client and a server or other network element for the purpose of transferring a call from one user device to the selected user device when they are managed by the same calling service.

Alternatively, communication set up may be enabled by maintaining a list of only the terminal identities rather than the corresponding client identities, the list being maintained on an accessible network element for the purpose of address look-up. For example a list of all the different terminals 102a-102d may be maintained on an element of the local home network, 105, 102a-102d, in which case only the local network addresses and terminal identities need be maintained in the list, and a system of IDs and separate sub-IDs would then not necessarily be required. The local list could be stored at each terminal 102a-102d or on a local server of the home network (not shown), and each client instance would be arranged to determine the necessary identities and addresses of the other instances' terminals by accessing the list over the local network.

In one implementation of call transfer where devices are managed by the same calling services, once the desired device has been selected as the endpoint for the call, then the transfer may be completed in a similar manner to known call forwarding techniques as described for example in US application no. 12/290232, publication no. US 2009-0136016, but with the call being transferred between different terminals of the same user based on different sub-IDs, rather than the call being transferred between different users based on different user IDs.

For the purpose of establishing which proximate devices should be rendered as icons as an alternate location to which a call may be transferred, proximity can be determined in a number of different ways. It can be based on GPS location, Bluetooth or other near field communications or other service discovery techniques such as Bonjour or SLP. Once other devices are identified, they are filtered by capability for handling the call. That is, they need to be either devices which contain a client running software connected to the same calling service, or devices (which can be instructed via Bluetooth or other communications) to log in on behalf of the user.

In one example, the client instances could be "network aware" and could be provided with an API enabled to facilitate not only the discovery of the different devices but also the easy transfer/usage of different media streams in a conversation from one end point to the next end point.

Figure 4 is a schematic block diagram of elements of a device capable of transferring calls or receiving transferred calls. The device comprises a processor 50 and a memory 52. The processor 50 can download code from the memory 52 for execution depending on the required operation of the device. In particular, the processor 50 can execute communication client 4, service discovery protocol 18 and/or a visual motion recognition component 48 which implements gesture capture algorithms. The visual motion recognition component can receive data from a camera 54 embedded in the screen, or elsewhere on the device. The camera 54 is provided to capture images of the user's gestures to supply image data to the processor for processing in accordance with gesture capture algorithms. In the above embodiment of "pinch-and-touch", a dedicated camera is not essential, provided that the screen has some motion recognition. The device has a display screen 20 for rendering images to a user. The device also has a Bluetooth interface 58 and a Wifi interface 60. The device also includes the location determining devices 19, for example a GPS module.

The above embodiments of the present invention allow a user to be presented with a list of available user terminals 102 and to select at least one secondary terminal 102 with the most appropriate capabilities to handle a particular type of communication, for example a live video stream or file transfer. According to an embodiment of the invention, a terminal 102 such as the mobile phone 102a installed with an instance of the client application 4 is arranged to discover other such user terminals 102. The user may transfer the call to one or more of the discovered terminals 102.

The terminal 102 that is used by a user to perform the selection will be referred to as the first device. Each selected terminal will be referred to as the second device. In the case of an outgoing call the first device is preferably the initiator of a call, and in the case of an incoming call the first device is preferably the terminal used to answer the call.

The client 4 on the second device such as 102c may be of the same user as that on the first device (i.e. logged in with the same user ID), or may be another terminal 102e borrowed from a different user (logged in with a different user ID), or may be on a different protocol altogether. Either way, the first and second devices 102a-102e together form one end of the call (the "near end") communicating with the client running on a further, third party device 102f (the "far end") via the Internet 101 or other such packet-based network.

Each device 102 is preferably configured with a protocol 18 for resource discovery for discovering the presence of other potential secondary terminals 102a, 102e, etc. and/or for discovering the media capability of the potential secondary terminals. The list of available resources may indicate the terminal type (e.g. TV, printer)so as to render an appropriate icon such that the user can select the most appropriate device to handle the communication event. For example the user may select a TV for a video call, a stereo system for a voice call, or a Network Attached Storage (NAS) device for a file transfer.

The available resources of other terminals installed with instances of the client 4 may be discovered using a number of alternative methods, for example as follows. A user terminal 102 installed with a suitable client application 4 or suitable instance of the client application may be referred to in the following as an "enabled terminal".

One such method is server assisted resource discovery. In one embodiment of the invention a server stores the location of each terminal having an instance of the client 4. When a user logs in, the client is arranged to provide its location and terminal type/capabilities to the server. The location could be defined as IP address, NAT or other suitable address input by the user. In this embodiment of the invention the server is arranged to return a list of proximate terminals to that of the first device in response to the primary client transmitting a "find suitable terminals" request to the server, responsive to the recognition of the "pinch" gesture". The capability discovery can also be done ahead of time, before the pinch gesture.

The server could instead be replaced with a distributed database for maintaining the list, or a combination of the two may be used. In the case where the primary and secondary terminals are of the same user, i.e. running clients logged in with the same username, the system of usernames and sub-identifiers may be used to distinguish between the different instances in a similar manner to that discussed above. However, that is not essential and instead other means of listing the available terminals could be used, e.g. by listing only the terminal identity rather than the corresponding client identity.

Another possible method is common local network device discovery. In an alternative embodiment the primary client is arranged to display icons representing a set of terminals 102a, 102c, 102d enabled with the client 4 to the user that are discovered on the local network, responsive to the recognition of the "pinch" gesture. Any IP enabled terminal that registers into a given network receives a unique IP address within that network. As an enabled terminal joins it will broadcast a presence message to all enabled terminals in that network announcing a given username / ID and a list of authorized users that have rights to access its capabilities. All the enabled terminals 102 that receive this message and have a common authorized user will reply back to authenticate themselves and establish a secure communication channel through which they will announce its IP address and available resources.

It will be appreciated that the above embodiments have been described only by way of example. Other variants or implementations may become apparent to a person skilled in the art given the disclosure herein. For example, the invention is not limited by any particular method of resource discovery or authorisation, and any of the above-described examples could be used, or indeed others. Further, any of the first, second and/or third aspects of the invention may be implemented either independently or in combination. Where it is referred to a server this is not necessarily intended to limit to a discrete server unit housed within a single housing or located at a single site. Further, where it is referred to an application, this is not necessarily intended to refer to a discrete, stand-alone, separately executable unit of software, but could alternatively refer to any portion of code such as a plug-in or add-on to an existing application. The invention is not limited by the described embodiments but only by the appendant claims.

## Claims

1. A method for transferring a communication event between a remote user device (102f) and a first user device (102a-e) from the first user device to a second user device (102a-d), **characterised in that** the method comprises:
capturing with a visual motion recognition component (48) a first input from a user of the first user device conducting the communication event, the first input being a physical gesture made by the user to indicate a desire to transfer the communication event;
in response to said first input detecting a set of user devices in physical proximity to the user;
filtering the set of detected user devices by the capability to handle the communication event;
displaying a representation of each of the set of filtered user devices to the user;
receiving a second input from the user to select one of the set of devices as a second device; and
transferring the communication event to the second device;
wherein the set of user devices includes devices that are not associated with the user.

2. A method according to claim 1, wherein the visual motion recognition component is configured to recognise the physical gesture as a pinch gesture.

3. A method according to claim 2, wherein the pinch gesture is a three finger pinch gesture.

4. A method according to claim 1, wherein the second input is one or more of: a tap by the user on the representation of the selected device; a single finger drag of a screen portion; a three finger drag of a screen portion; and a flick towards the representation.

5. A method according to claim 4, comprising the step of rendering on a display (20) of the first user device an image relating to the communication event, wherein the step of capturing the first input causes the image to reduce to reveal a display area for displaying the representations of the set of user devices, wherein optionally the image is reduced in size by crumpling.

6. A first user device (102a-e) for conducting a communication event with a remote user device (102f), **characterised in that** the user device comprises :
a visual motion recognition component (48) configured to capture a first input from a user of the first user device (102a-e), the first input being a physical gesture made by the user to indicate a desire to transfer the communication event;
means configured to:
receive information identifying a set of user devices in physical proximity to the user in response to the first input;
filter the set of detected user devices by the capability to handle the communication event,
display a representation of each of the set of filtered user devices to the user,
receive a second input from the user to select one of the set of devices as a second device, and
transfer the communication event to the second device;
wherein the set of user devices includes devices that are not associated with the user.

7. A device according to claim 6, wherein the means for receiving a second input from the user comprises a software application executed at the device for controlling the display and responsive to an input tapped from the user as said second input, wherein optionally the software application is a communication client which is further responsible for conducting the communication event and transferring the communication event to the second device.

8. A computer program product, comprising program code means which when executed by a processor implement the steps of any of claims 1 to 5.

## Patentansprüche

1. Verfahren zur Übertragung eines Kommunikationsereignisses zwischen einer entfernten Benutzervorrichtung (102f) und einer ersten Benutzervorrichtung (102a-e) von der der ersten Benutzervorrichtung zu einer zweiten Benutzervorrichtung (102a-d), **dadurch gekennzeichnet, dass** das Verfahren Folgendes umfasst:
Aufnehmen einer ersten Eingabe von einem Benutzer der ersten Benutzervorrichtung, die das Kommunikationsereignis durchführt, mit einer optischen Bewegungserkennungskomponente (48), wobei die erste Eingabe eine körperliche Geste ist, die von dem Benutzer gemacht wird, um einen Wunsch zum Übertragen des Kommunikationsereignisses anzuzeigen;
als Reaktion auf die erste Eingabe Erfassen eines Satzes von Benutzervorrichtungen in physischer Nähe zu dem Benutzer;
Filtern des Satzes von erfassten Benutzervorrichtungen anhand der Fähigkeit zum Handhaben des Kommunikationsereignisses;
Anzeigen einer Darstellung jedes des Satzes von gefilterten Benutzervorrichtungen für den Benutzer;
Empfangen einer zweiten Eingabe von dem Benutzer, um eine des Satzes von Vorrichtungen als eine zweite Vorrichtung auszuwählen; und
Übertragen des Kommunikationsereignisses an die zweite Vorrichtung;
wobei der Satz von Benutzervorrichtungen Vorrichtungen beinhaltet, die nicht mit dem Benutzer assoziiert sind.

2. Verfahren nach Anspruch 1, wobei die optische Bewegungserkennungskomponente dazu konfiguriert ist, die körperliche Geste als eine Pinch-Geste zu erkennen.

3. Verfahren nach Anspruch 2, wobei die Pinch-Geste eine Drei-Finger-Pinch-Geste ist.

4. Verfahren nach Anspruch 1, wobei die zweite Eingabe eine oder mehrere der folgenden ist: ein Tippen auf die Darstellung der ausgewählten Vorrichtung durch den Benutzer; ein Ein-Finger-Ziehen eines Bildschirmteils; ein Drei-Finger-Ziehen eines Bildschirmteils und ein Schnippen zu der Darstellung.

5. Verfahren nach Anspruch 4, das den Schritt des Renderns eines Bilds in Bezug auf das Kommunikationsereignis auf einer Anzeige (20) der ersten Benutzervorrichtung umfasst, wobei der Schritt des Aufnehmens der ersten Eingabe bewirkt, dass das Bild reduziert wird, um einen Anzeigebereich zum Anzeigen der Darstellungen des Satzes von Benutzervorrichtungen zu offenbaren, wobei gegebenenfalls die Größe des Bilds durch Knautschen reduziert wird.

6. Erste Benutzervorrichtung (102a-e) zum Durchführen eines Kommunikationsereignisses mit einer entfernten Benutzervorrichtung (102f), **dadurch gekennzeichnet, dass** die Benutzervorrichtung Folgendes umfasst:
eine optische Bewegungserkennungskomponente (48), die dazu konfiguriert ist, eine erste Eingabe von einem Benutzer der ersten Benutzervorrichtung (102a-e) aufzunehmen, wobei die erste Eingabe eine körperliche Geste ist, die von dem Benutzer gemacht wird, um einen Wunsch zum Übertragen des Kommunikationsereignisses anzuzeigen;
ein Mittel, das zu Folgendem konfiguriert ist:
Empfangen von Informationen, die einen Satz von Benutzervorrichtungen in physischer Nähe zu dem Benutzer identifizieren, als Reaktion auf die erste Eingabe;
Filtern des Satzes von erfassten Benutzervorrichtungen anhand der Fähigkeit zum Handhaben des Kommunikationsereignisses,
Anzeigen einer Darstellung jedes des Satzes von gefilterten Benutzervorrichtungen für den Benutzer,
Empfangen einer zweiten Eingabe von dem Benutzer, um eine des Satzes von Vorrichtungen als eine zweite Vorrichtung auszuwählen, und
Übertragen des Kommunikationsereignisses an die zweite Vorrichtung;
wobei der Satz von Benutzervorrichtungen Vorrichtungen beinhaltet, die nicht mit dem Benutzer assoziiert sind.

7. Vorrichtung nach Anspruch 6, wobei das Mittel zum Empfangen einer zweiten Eingabe von dem Benutzer eine Softwareanwendung, die an der Vorrichtung ausgeführt wird, zum Steuern der Anzeige umfasst, die auf eine Eingabe reagiert, die von dem Benutzer als die zweite Eingabe getippt wird, wobei gegebenenfalls die Softwareanwendung ein Kommunikationsclient ist, der weiterhin für das Durchführen des Kommunikationsereignisses und das Übertragen des Kommunikationsereignisses an die zweite Vorrichtung verantwortlich ist.

8. Computerprogrammprodukt, das Programmcodemittel umfasst, die bei Ausführung durch einen Prozessor die Schritte nach einem der Ansprüche 1 bis 5 umsetzen.

## Revendications

1. Procédé pour transférer un événement de communication, entre un dispositif utilisateur distant (102f) et un premier dispositif utilisateur (102a-e), du premier dispositif utilisateur à un deuxième dispositif utilisateur (102a-d), **caractérisé en ce que** le procédé consiste à :
saisir avec un élément de reconnaissance de mouvement visuel (48) une première entrée d'un utilisateur du premier dispositif utilisateur exécutant l'événement de communication, la première entrée consistant en un geste physique effectué par l'utilisateur pour indiquer un souhait de transférer l'événement de communication ;
en réponse à ladite première entrée, détecter un ensemble de dispositifs utilisateur dans un périmètre physique proche de l'utilisateur ;
filtrer l'ensemble de dispositifs utilisateur détectés à l'aide de la fonctionnalité dédiée à la gestion de l'événement de communication ;
afficher à l'intention de l'utilisateur une représentation de chaque dispositif de l'ensemble des dispositifs utilisateur filtrés ;
recevoir une deuxième entrée de l'utilisateur pour sélectionner un dispositif de l'ensemble de dispositifs en tant que deuxième dispositif ; et
transférer l'événement de communication au deuxième dispositif ;
dans lequel l'ensemble de dispositifs utilisateur comporte des dispositifs non associés à l'utilisateur.

2. Procédé selon la revendication 1, dans lequel l'élément de reconnaissance de mouvement visuel est configuré de sorte à reconnaître le geste physique comme un geste de pincement.

3. Procédé selon la revendication 2, dans lequel le geste de pincement est un geste de pincement effectué avec trois doigts.

4. Procédé selon la revendication 1, dans lequel la deuxième entrée est un geste ou plusieurs gestes réalisé(s) sous la forme : d'un toucher du doigt de l'utilisateur sur la représentation du dispositif sélectionné ; d'un balayage à un doigt d'une partie de l'écran ; d'un balayage à trois doigts d'une partie de l'écran ; et d'un coup de doigt pour basculer sur la représentation.

5. Procédé selon la revendication 4, comprenant l'étape consistant à effectuer sur un afficheur (20) du premier dispositif utilisateur un rendu d'une image liée à l'événement de communication, dans lequel l'étape consistant à saisir la première entrée conduit à la réduction de l'image pour révéler une zone de visualisation affichant la représentation de l'ensemble des dispositifs utilisateur, dans lequel la dimension de l'image est éventuellement réduite par froissement.

6. Premier dispositif utilisateur (102a-e) pour exécuter un événement de communication avec un dispositif utilisateur distant (102f), **caractérisé en ce que** le dispositif utilisateur comporte :
un élément de reconnaissance de mouvement visuel (48) configuré de sorte à saisir une première entrée d'un utilisateur du premier dispositif utilisateur (102a-e), la première entrée étant un geste physique effectué par l'utilisateur pour indiquer un souhait de transférer l'événement de communication ;
un dispositif configuré pour :
recevoir l'information identifiant un ensemble de dispositifs utilisateur dans un périmètre physique proche de l'utilisateur en réponse à la première entrée ;
filtrer l'ensemble de dispositifs utilisateur détectés à l'aide de la fonctionnalité de gestion de l'événement de communication ;
afficher à l'intention de l'utilisateur une représentation de chaque dispositif de l'ensemble des dispositifs utilisateur filtrés ;
recevoir une deuxième entrée de l'utilisateur pour sélectionner un dispositif de l'ensemble de dispositifs en tant que deuxième dispositif ; et
transférer l'événement de communication au deuxième dispositif ;
dans lequel l'ensemble de dispositifs utilisateur comporte des dispositifs non associés à l'utilisateur.

7. Dispositif selon la revendication 6, dans lequel le dispositif permettant de recevoir une deuxième entrée de l'utilisateur comprend une application logicielle exécutée à hauteur d'un dispositif qui contrôle l'affichage et qui est réceptif à une entrée effectuée par un toucher de l'utilisateur en tant que ladite deuxième entrée, dans lequel l'application logicielle est éventuellement un client communication qui est en outre responsable d'exécuter l'événement de communication et de transférer l'événement de communication au deuxième dispositif.

8. Produit de programme d'ordinateur, comprenant des moyens de code de programme qui, lorsque exécutés par un processeur, implémentent les étapes citées dans l'une quelconque des revendications 1 à 5.
